# EUROPEAN PATENT APPLICATION

(11) **EP 1 503 585 A1**
(43) Date of publication of application: **02.02.2005**
(21) Application number: 03778786.8
(22) Date of filing: 10.12.2003
(51) Int. Cl.: H04N 5/91

(54) **EDITION DEVICE AND IMAGE DISPLAY DEVICE**

(30) Priority: 08.01.2003 JP 2003002678; 12.02.2003 JP 2003034319
(71) Applicant: Sony Corporation, Tokyo 141-0001 (JP)
(72) Inventor: SHUDO, Tomoyuki, Shinagawa-ku, Tokyo 141-0001 (JP); UCHINO, Ryota, Meguro-ku, Tokyo 152-0022 (JP)
(74) Representative: Leppard, Andrew John
(86) International application number: PCT/JP2003/015816
(87) International publication number: WO 2004/064395

(57) **Abstract**

The present invention provides a portable type editing apparatus (1) that includes a main body (10) of substantially rectangular shape, a cover (30) having a main surface (31) of substantially the same shape as that of a main surface (11) of the main body (10), and a coupling portion (40) for pivotably coupling the main body (10) and the cover (30). The main body (10) is provided with memory card slots (15, 16) into which memory cards (2A, 2B) are inserted, and the cover (30) is provided with a liquid crystal display panel (35) on which an A image (36A) and a B image (36B), which are to be edited, are displayed. The center of the main surface (11) of the main body (10) is provided with a rotational operation unit (21) that can slide along the longitudinal direction of the main body (10), and either of the memory cards (2A, 2B) is selected to change subject to be edited by sliding the rotational operation unit (21).

## Description

### Technical Field

The present invention relates to an editing apparatus and an image display apparatus, in particular, to an editing apparatus and an image display apparatus of portable type for editing image data or video data stored in a memory card, or a detachable semiconductor storage medium, and displaying image data or video data on a liquid crystal display panel.

This application claims priority of Japanese Patent Applications No. 2003-002678, filed on January 8, 2003, and No. 2003-034319, filed on February 12, 2003, the entirety of which are incorporated by reference herein.

### Background Art

Recently, capacity of memory cards or card-shaped recording media using a semiconductor memory is being increased, which enables storage of large capacity data such as audio data and video data. Being small in size as compared with tape-shaped recording media or disc-shaped recording media, these memory cards can be used as storage media of portable type small-sized electronic equipments intended for mobile use in advance.

As an example of a conventional portable type electronic equipment using a memory card as a storage medium, there is known a digital camera. The digital camera, which was originally used to shoot still pictures, can be recently used to shoot and record moving pictures using picture compression techniques such as the MPEG (Moving Picture Experts Group) etc. There is disclosed an electronic image pickup device provided with function of recording still pictures as well as that of recording moving pictures in Japanese Laying-Open Patent 2001-254258. On the other hand, cellular phones and PDAs (Personal Digital Assistants), which use a memory card as a storage medium, are provided with function of shooting/recoding still pictures as well as moving pictures.

Some editing apparatuses for editing video signals, etc. may have a jog dial or a shuttle ring so that editing points can be easily detected when reproducing video signals stored in an video signal playback apparatus with varied playback speed. For example, there is disclosed an input apparatus having a jog shuttle unit that is rotated when performing playback operation with varied playback speed using a video signal playback apparatus such as a DVD (Digital Versatile Disc) drive in Japanese Laying-Open Patent H10-199124.

When using a portable type electronic equipment that has a memory card as a storage medium and is provided with function of shooting/recoding moving pictures, it is desired that editing operation be easily performed in case the user in travels etc. is away from his home or office. In case the user travels overseas for a long time, it is desired that images that are shot by the user be edited and cleaned up to effectively use memory cards since the number and capacity of carry-along memory cards are limited. Furthermore, in case image materials that are shot by the user are too much, it is desired that the images be briefly edited since it takes too much time to edit the images after the user returns to his home or office.

However, since portable type editing apparatuses are required to be reduced in size for mobile use, there is raised confinement in arranging operation buttons and dials. For example, in editing two kinds of video signals, it is difficult to arrange individual operation buttons and dials for the respective video signals. Specifically, even if above-described jog shuttle unit is excellent in operationality and is favorably used for efficient editing operation, it is considerably difficult to arrange plural individual jog shuttle units corresponding to plural video signals to be edited in view of arrangement space.

Editing apparatuses using a hard disc drive (HDD) are not well suited to portable type electronic equipments since they need to be equipped with a motor requiring large power consumption, and are not excellent in resisting shocks, leading to lack of reliability. On the other hand, as for disc-shaped recording media such as compact discs, even if they possess higher reliability, large power consumption is undesirably required to drive a motor. Accordingly, from the viewpoint of power consumption and reliability, portable type editing apparatuses having a memory card using a semiconductor memory are desired to be produced.

### Disclosure of the Invention

Accordingly, the present invention has an object to overcome the above-mentioned drawbacks of the prior art by providing a new editing apparatus and a new image display apparatus.

The present invention has another object to provide a portable type editing apparatus using a detachable semiconductor memory such as a memory card as a recording medium, and an editing apparatus and an image display apparatus of portable type for mobile use that are excellent in operationality.

The above object can be attained by providing an editing apparatus that edits edit material information to generate resultant edited information, including:
a plurality of semiconductor memory insertion units into which a plurality of semiconductor memories, which have recorded therein the edit material information and/or the resultant edited information, are removably inserted respectively;
a display unit for concurrently displaying a plurality of images;
a control unit for controlling the processing of writing/reading information to/from the semiconductor memories inserted into the plural semiconductor memory insertion units, and for controlling the processing of editing the edit material information, and for controlling the processing of displaying a plurality of images on the display unit; and
an edit processing unit that is controlled by the control unit to edit the edit material information to output resultant edited information.

The editing apparatus has a main body of portable dimensions, and a cover that is so supported as to open and close freely in relation to the main body, and has its one surface facing the main body made to be of substantially the same shape as that of the main surface of the main body, and the display unit is arranged on the surface of the cover facing the main body. Furthermore, in the editing apparatus, at least some of the semiconductor memories inserted into the plural semiconductor memory insertion units have stored therein the edit material information, and the control unit reads out the edit material information from at least some of the semiconductor memories to make the edit processing unit edit the edit material information, and controls the processing of writing resultant edited information to at least one of the semiconductor memories inserted into the plural semiconductor memory insertion units.

Also, the above object can be attained by providing an editing apparatus that edits a plurality of pieces of edit material information recorded in a plurality of recording media to generate resultant edited information, including:
an edit processing unit that is controlled by a control unit to edit the plural pieces of edit material information to output resultant edited information;
an input operation unit having a rotational operation means that is rotated to be operated; and
control means for controlling the edit processing in the edit processing unit in accordance with input operation of the input operation unit;
wherein the rotational operation means can move in parallel (or slide), and the control means selects recording media having recorded therein the plural pieces of edit material information corresponding to the parallel motion (or slide) of the rotational operation means so as to make the edit processing unit edit the edit material information.

The rotational operation means may be a jog/shuttle ring (or dial).

Furthermore, the above object can be attained by providing an image display apparatus, including:
a main body;
a cover that has its one surface facing the main body made to be of substantially the same shape as that of the main surface of the main body;
an image display unit that is arranged on at least either of the main body or the cover;
a shaft portion that is arranged on extension portions extending from respective corresponding one sides of the main body and the cover, and pivotably couples the main body and the cover around a axis parallel with the respective one sides; and
shaft-end operation portions that protrude from the shaft portion along its axis direction.

These objects and other objects, features and advantages of the present invention will become more apparent from the following detailed description of the preferred embodiments of the present invention.

### Brief Description of the Drawings

FIG.1 shows a perspective view of the editing apparatus according to the present invention whose cover is opened.
FIG.2 shows a plan view of the editing apparatus according to the present invention, and FIG.3 shows a rear view of the same.
FIG.4A shows a front view of a cover of the editing apparatus according to the present invention, and FIG.4B shows a IV-TV line cross-sectional view of FIG.2.
FIG.5 shows a cross-sectional view of the editing apparatus according to the present invention.
FIG.6 shows the configuration of a rotary encoder used in a rotational operation unit of the editing apparatus, specifically, FIG.6A, FIG.6B, and FIG.6C show a plan view, a cross-sectional view, and a side view thereof, respectively.
FIG.7 shows the configuration of a multiway switch, specifically, FIG.7A, FIG.7B, and FIG.7C show a plan view, a front view, and a side view thereof, respectively.
FIG.8 shows a block diagram indicative of internal circuits of the editing apparatus.
FIG.9 shows a perspective view of the editing apparatus whose rear side is provided with a belt having a battery housed therein.

### Best Mode for Carrying out the Invention

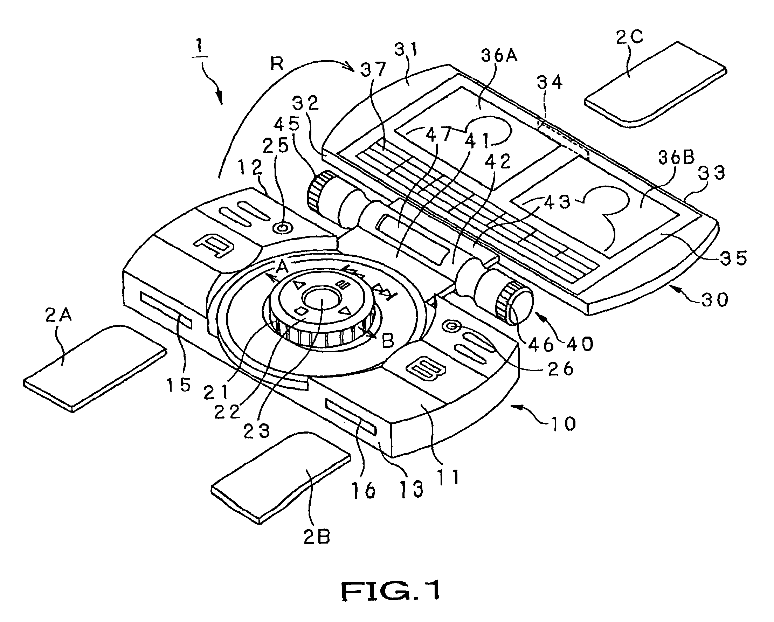

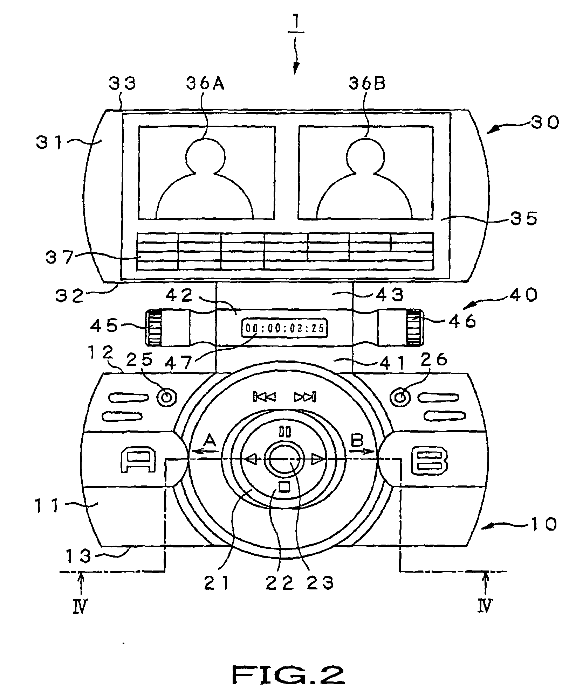

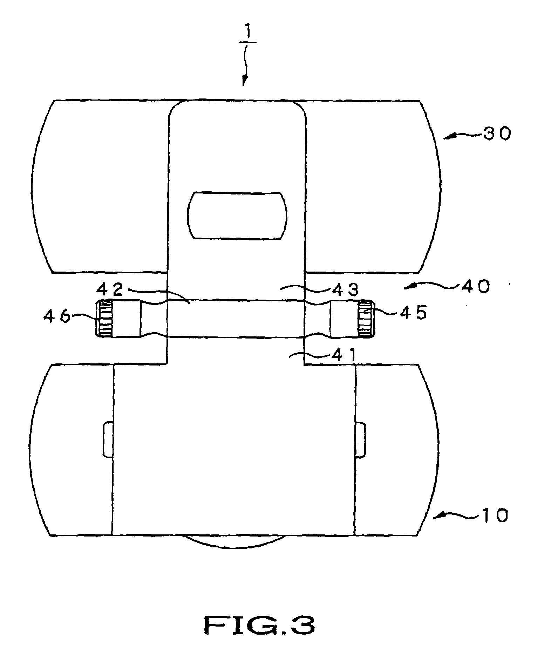

The present invention will further be described below concerning the best modes with reference to the accompanying drawings. The present invention is applied to an editing apparatus that edits video data stored in a memory card, which is a detachable semiconductor storage medium, to display thus edited video data on a liquid crystal display panel. FIG.1 shows a perspective view of an editing apparatus 1 according to the present invention, and FIG.2 and FIG.3 show a plan view and a rear view of the editing apparatus 1 respectively.

The editing apparatus 1 shown in FIG.1 to FIG.3 edits material information to be edited or edit material information such as image/video data and audio data to generate resultant edited information, and a plurality of memory cards or semiconductor memories having recorded therein edit material information and/or resultant edited information are removably inserted into the editing apparatus 1. The memory cards are those using a flash EEPROM (Electrically Erasable and Programmable ROM) referred to as an SSFDC (Solid-State Flexible Disc Card), or semiconductor storage media such as miniature cards that can store at least image/video data, and they have a memory capacity of 4MB to 1 GB or larger.

As shown in FIG.1 to FIG.3, the editing apparatus 1 includes a main body 10 of substantially rectangular shape whose both sides perpendicular to the longitudinal direction are rounded, a cover 30 having a main surface 31 of substantially the same shape as that of a main surface 11 of the main body 10, and a coupling portion 40 for pivotably (opens and closes freely) coupling the main body 10 and the cover 30. The coupling portion 40 has an extension portion 41 extending from a side surface 12 (the back side) parallel with the longitudinal direction of the main body 10, and an extension portion 43 extending from a side 32 parallel with the longitudinal direction of the cover 30, and a shaft portion 42 for pivotally supporting the extension portions 41, 43 around an axis parallel with the longitudinal direction of the main body 10 and the cover 30. The cover 30 opens when the cover 30 pivots around the shaft portion 42 away from the main body 10 along the direction of an arrow "R" shown in FIG.1.

At the center of the main surface 11 of the main body 10, there is provided a rotational operation unit 21 such as a jog/shuttle unit, and the rotational operation unit 21 can move or slide along the longitudinal direction of the main body 10. In the present invention, subject to be edited is switched when moving the rotational operation unit 21 along the left and right directions, or the directions of arrows "A" and "B" shown in FIG.1 and FIG.2. After being moved, the rotational operation unit 21 returns to the original center position. At the circumference of the rotational operation unit 21, there are formed a plurality of notches so as to facilitate the operation by fingers. Furthermore, at the inside of the rotational operation unit 21, there is provided a direction indicating operation unit 22. The direction indicating operation unit 22 is formed into a flat ring or concentric configuration. When four parts or the upper, lower, left, and right pans are pushed for operation, four kinds of directions are performed. In this embodiment, corresponding to the operations of pushing the upper, lower, left, and right parts of the direction indicating operation unit 22, pause, stop, backward playback, and forward playback are selected, respectively. On the other hand, a cursor key may be used to move a cursor on a screen, to be described later, along the upper, lower, left, and right directions. Furthermore, at the inside center of the direction indicating operation unit 22, there is provided a circular button 23 that may be used for edit determination operation to determine the in-point and out-point at the time of punch-in when performing the pushing operation.

At a side surface 13 (the front side) parallel with the longitudinal direction of the main body 10, there are provided a plurality of or two memory card slots 15, 16 into which two semiconductor memories are inserted.

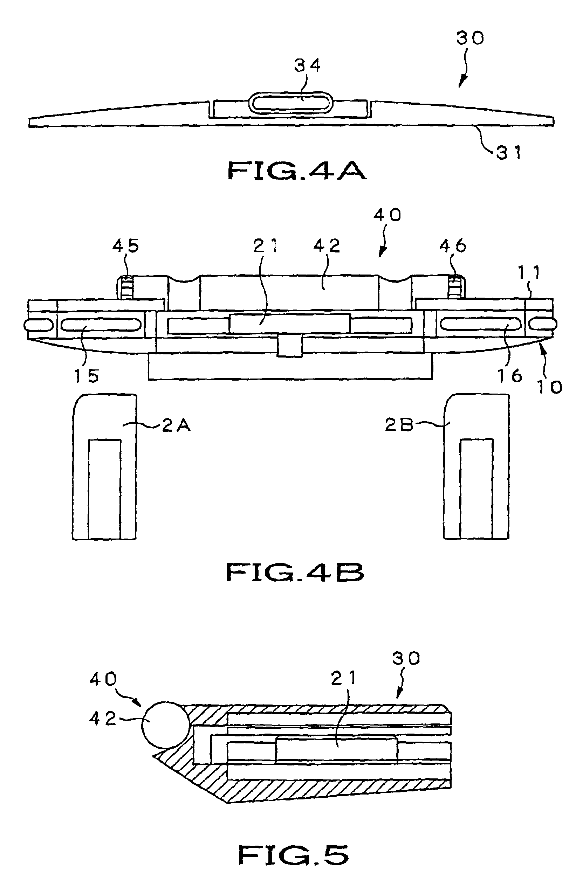

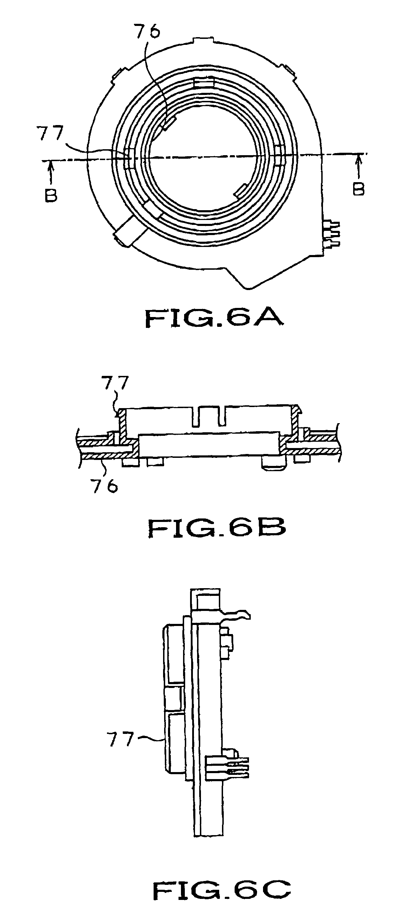

FIG.4A shows a front view of the cover 30 of the editing apparatus 1, while FIG.4B shows a IV-IV line cross-sectional view of FIG.2. FIG.5 shows a cross-sectional view of the editing apparatus 1 whose cover is closed, which is cut off at the center of the longitudinal direction.

As is apparent from FIG.1 to FIG.5, in the present invention, at a side surface 33 (the front side) parallel with the longitudinal direction of the cover 30, there is provided a memory card slot 34 into which a semiconductor memory is inserted.

The main surface 31 of the cover 30 is provided with a liquid crystal display panel (LCD panel) 35 on which edit materials to be edited and edited results for editing works are displayed. In the present invention, the liquid crystal display panel 35 displays a plurality of images to be edited, for example, two images of an "A" image 36A and a "B" image 36B, and related edit information 37 that is related to edit processing and edit contents if necessary. In the present invention, for example, an image signal that is an edit material stored (recorded) in a memory card 2A inserted into the memory card slot 15 of the main body 10 is displayed as the "A" image 36A, while an image signal that is an edit material stored (recorded) in a memory card 2B inserted into the memory card slot 16 is displayed as the "B" image 36B. On the other hand, an image signal of an edited result may be written to a memory card 2C inserted into the memory card slot 34 of the cover 30, otherwise the memory card 2C can be used for various uses such as storing the third edit material.

When moving (sliding) the rotational operation unit 21 arranged on the main surface 11 of the main body 10 to the left direction (arrow "A" direction shown in FIG.1), subject to be edited is switched to the "A" image 36A. When rotating the rotational operation unit 21 after being returned to the original center position, jog/shuttle operation is performed for an image signal of an edit material stored in the memory card 2A inserted into the memory card slot 15. On the other hand, when moving (sliding) the rotational operation unit 21 to the right direction (arrow "B" direction shown in FIG.1), subject to be edited is switched to the "B" image 36B. When rotating the rotational operation unit 21 after being returned to the original center position, jog/shuttle operation is performed for an image signal of an edit material stored in the memory card 2B inserted into the memory card slot 16. That is, subject to be edited is switched to either of edit materials stored (recorded) in the memory cards 2A and 2B by moving the rotational operation unit 21 to the left or right direction (arrow "A" direction or arrow "B" direction shown in FIG.1).

The jog/shuttle operation is conventionally known as input operation that makes a video playback apparatus such as a VTR perform playback operation with varied speed. For example, playback speed is varied corresponding to rotation angle when pivoting a shuttle ring, playback direction (forward direction, backward direction) is changed corresponding to rotation direction, and playback position (playback frame) is changed corresponding to rotation angle and rotation direction when rotating a jog dial. In the present invention, at least one of the jog/shuttle operation is performed using a rotating ring of the rotational operation unit 21, and the shuttle operation alone may be performed. In case of performing both operations, the jog operation and the shuttle operation may be alternately switched using a switch button, not shown. On the other hand, the rotational operation unit 21 may be of double-concentric-ring configuration, assigning one of double rings thereof for the jog operation and the other for the shuttle operation.

The main surface 11 of the main body 10 has arranged thereon operation buttons such as recording buttons 25, 26, if necessary. In the example shown in FIG.1 and FIG.2, the recording buttons 25, 26 are arranged for respective subjects to be edited ("A" image, "B" image). On the other hand, these buttons may be unified into one button so as to switch subject to be operated corresponding to the operation of sliding the rotational operation unit 21 to switch subject to be edited.

At both ends of the shaft portion 42 being a rotating shaft of the coupling portion 40 that couples the main body 10 and the cover 30, there are arranged shaft-end operation portions 45, 46 that protrude along the axis direction of the shaft portion 42. These shaft-end operation portions 45, 46 can pivot around their axes. In the present invention, the shaft-end operation portion 45 generates a click sense when pivoting, and may be used as a power switch. On the other hand, the shaft-end operation portion 46 pivots within a predetermined range, and may be used as a volume grip that varies sound volume corresponding to pivot angle. Otherwise, they may be used as an input operation unit related to editing works, or an input operation unit adapted for other purposes.

Furthermore, the shaft portion 42 has arranged thereon a liquid crystal display 47, if necessary, which displays a time code etc. that indicates the position of editing point in time, minute, second, and frame.

The rotational operation unit 21 may be a rotary encoder of the incremental type, and thus can work as either of a jog dial and a shuttle ring.

FIG.6 shows the configuration of the incremental type rotary encoder, specifically, FIG.6A, FIG.6B, and FIG.6C show a plan view, a B-B line cross-sectional view of FIG.6A, and a right-side view of the rotary encoder, respectively.

As shown in FIG.6A to FIG.6C, the rotary encoder has a fixation portion 76 in the shape of a ring that is fixed to the main body 10, and a rotation portion 77 also in the shape of a ring that rotates along the circumference of the fixation portion 76, and has its center portion hollowed out.

In thus configured rotary encoder, the fixation portion 76 has attached thereto a brush, not shown, while the rotation portion 77 has attached thereto a plurality of electrodes, also not shown, and pulses are output when the rotation portion 77 rotates and the brush and the plural electrodes come into contact with each other and break contact.

The direction indicating operation unit 22 arranged inside the rotational operation unit 21 may be a multiway switch that can indicate four directions of the upper, lower, left, and right directions.

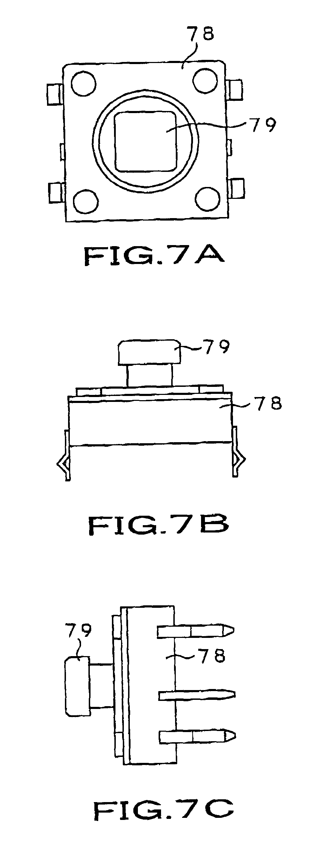

FIG.7 shows the configuration of the four-direction multiway switch, specifically, FIG.7A, FIG.7B, and FIG.7C show a plan view, a front view, and a right-side view of the multiway switch, respectively.

As shown in FIG.7, the multiway switch has a switch main body 78 that is fixed to the main body 10, and a shaft 79 that is attached to the top surface of the switch main body 78 and can be made to incline toward four directions of the upper, lower, left, and right directions shown in FIG.7A by a predetermined angle. When the shaft 79 is inclined to any of the four directions of the upper, lower, left, and right directions, the multiway switch outputs a signal corresponding to the inclination direction.

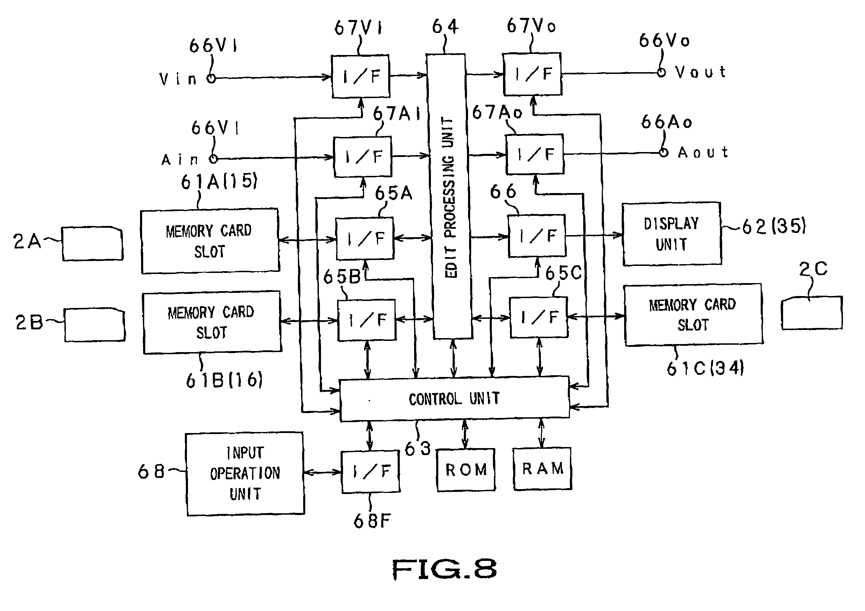

FIG.8 shows a block diagram indicative of schematic configuration of the editing apparatus 1. As shown in FIG.8, the editing apparatus 1 includes memory card slots 61A, 61B, 61C being a plurality of semiconductor memory insertion units into which the memory cards 2A, 2B, 2C being a plurality of semiconductor memories, which have recorded therein edit material information and/or resultant edited information, are removably inserted respectively, a display unit 62 that can concurrently display a plurality of images, a control unit 63 that controls writing/reading information to/from the memory cards 2A, 2B, 2C inserted into the memory card slots 61A, 61B, 61C, and controls editing the edit material information, and controls displaying a plurality of images on the display unit 62, and an edit processing unit 64 that is controlled by the control unit 63 to edit the edit material information to output resultant edited information. The memory card slots 61A, 61B, 61C correspond to memory card slots 15, 16, 34 shown in FIG.1 to FIG.5 respectively, and the display unit 62 corresponds to the liquid crystal display panel 35. Reading/writing edit material information from/to the memory cards 2A, 2B, 2C inserted into the memory card slots 61A, 61B, 6 1 C is performed over interface (I/F) circuits 65A, 65B, 65C, respectively. Since the interface circuits 65A, 65B, 65C are controlled by the control unit 63, reading/writing information from/to the memory cards 2A, 2B, 2C is controlled by the control unit 63, Edit material information read out from the memory cards 2A, 2B, 2C is sent to the edit processing unit 64 over the interface circuits 65A, 65B, 65C respectively, and resultant edited information edited by and output from the edit processing unit 64 is written to the memory cards 2A, 2B, 2C over the interface circuits 65A, 65B, 65C respectively. Furthermore, edit material information, resultant edited information, or related edit information are sent to the display unit 62 over an interface circuit 66 to be displayed thereon.

Furthermore, an input operation unit 68 such as the rotational operation unit 21 is connected to the control unit 63 through an interface circuit 68F. Furthermore, a ROM (Read Only Memory), a RAM (Random Access Memory), etc. are connected to the control unit 63. As an example of the input operation unit 68, the rotational operation unit 21 is employed, and switch signals generated by the sliding operation, pulse signals corresponding to the rotation of the rotary encoder, etc. are sent to the control unit 63 over the interface circuit 68F. The input operation unit 68 further includes the direction indicating operation unit 22, operation buttons of circular button 23 and recording buttons 25, 26, and shaft-end operation portions 45, 46.

Furthermore, video signals and audio signals may be received from or sent to the outside. That is, an input video signal Vin received by a video input terminal 66Vi is sent to the edit processing unit 64 over an interface circuit 67Vi, while an input audio signal Ain received by an audio input terminal 66Ai is sent to the edit processing unit 64 over an interface circuit 67Ai. On the other hand, an edited video output from the edit processing unit 64 is sent to a video output terminal 66Vo over an interface circuit 67Vo to be sent as a video output signal, while an edited audio output from the edit processing unit 64 is sent to an audio output terminal 66Ao over an interface circuit 67Ao to be sent as an audio output signal.

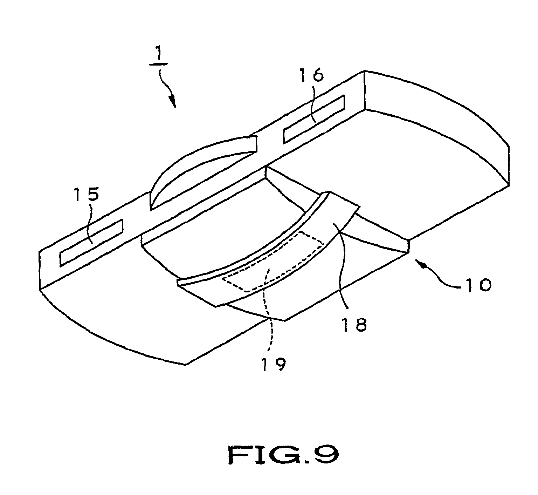

In case such portable type small-sized electronic equipments are carried on for mobile use, generally, a battery is used as power source. The battery requires larger space as its capacity gets large, and enlarges the size of a main body of an electronic equipment when built in the main body. So, it is desired that a battery 19 be housed in a carrying belt (band) 18 fixed to the rear side of the main body 10 of the editing apparatus 1, as shown in FIG.9. The battery 19, which may be either a primary battery or a secondary battery, is required to be thin and so formed as to be housed in the belt (band) 18. In this case, a plurality of button cells may be used, on the other hand, it is desired that a flexuous secondary battery in the shape of a thin sheet be used. There is desirably used a thin-type secondary battery, in which cathode material, which has a polymer film provided with cathode collector and cathode active material, and anode material, which has a polymer film provided with anode collector and anode active material, are layered through solid polymer electrolyte to form a battery element, and the battery element is wrapped by a laminate film. Specifically, gelatinous material and solid electrolyte are used, and a preferably flexuous lithium ion polymer secondary battery of high energy density is desirably used. In this case, the main body 10 itself does not need to house a battery therein, on the other hand, the main body 10 may have a battery so as to secure sufficient battery capacity, which can prolong the battery life by using the battery of the main body 10 in combination with the battery 19 of the belt (band) 18.

As in the above, according to the present invention, a portable type editing apparatus that uses a detachable semiconductor memory such as the memory card 2 as a recording medium can be provided, enabling editing operation easily when the user in travels etc. is away from his home or office. Furthermore, since a jog/shuttle unit excellent in operationality such as the rotational operation unit 21 is solely arranged, and subject to be edited is switched by sliding the rotational operation unit 21, the sole rotational operation unit 21 can be easily used in operating two or more subjects to be edited, which can improve operationality of the portable type small-sized editing apparatus. Furthermore, at both ends of the shaft portion 42, there are arranged shaft-end operation portions 45, 46 that protrude along the axis direction thereof. Thus. operation units can be arranged at outside the main body 10 (or the main surface 11 etc.), for example, at both ends of an opening/closing shaft, which can increase the number of operation units and improve operationality of the portable type small-sized editing apparatus. Furthermore, since a battery is housed in the carrying belt (band) 18 fixed to the rear side of the main body 10, battery capacity can be increased with the size of the main body 10 suppressed.

The invention is not limited to the embodiments, but various modifications, alternative constructions or equivalents can be implemented without departing from the scope and spirit of the present invention.

For example, in above described example, the rotational operation unit 21 can slide along the longitudinal direction, or left and right directions in FIG.2. On the other hand, the rotational operation unit 21 may slide along the direction perpendicular to the longitudinal direction, or upward and downward directions, otherwise, directions combining these directions, or left and right as well as upward and downward directions. Furthermore, in above described example, the editing apparatus is used to edit mainly video signals. On the other hand, the editing apparatus is used to edit video and audio signals, otherwise, audio signals alone. Furthermore, the present invention is applied to an editing apparatus, on the other hand, the present invention can be applied to a portable type small-sized image display apparatus. For example, an image display apparatus, which has a main body and a cover provided with a display that are pivotally coupled through a shaft portion, may be provided with shaft-end operation portions that protrude along the axis direction from the shaft portion. Furthermore, it is apparent that the shape of the main body and cover as well as the configuration of the operation unit are not restricted to the examples shown in FIGURES.

### Industrial Applicability

As in the above, since the present invention provides an editing apparatus that edits edit material information to generate resultant edited information including a plurality of semiconductor memory insertion units into which a plurality of semiconductor memories, which have recorded therein the edit material information and/or the resultant edited information, are removably inserted respectively, a display unit for concurrently displaying a plurality of images, a control unit for controlling the processing of writing/reading information to/from the semiconductor memories inserted into the plural semiconductor memory insertion units, and for controlling the processing of editing the edit material information, and for controlling the processing of displaying a plurality of images on the display unit, and an edit processing unit that is controlled by the control unit to edit the edit material information to output resultant edited information. Thus, a portable type editing apparatus that uses a detachable semiconductor memory such as a memory card as a recording medium can be provided, enabling editing operation easily when the user in travels etc. is away from his home or office.

Furthermore, since the present invention provides an editing apparatus that edits a plurality of pieces of edit material information recorded in a plurality of recording media to generate resultant edited information including an edit processing unit that is controlled by a control unit to edit the plural pieces of edit material information to output resultant edited information, an input operation unit having a rotational operation means that is rotated to be operated, and control means for controlling the edit processing in the edit processing unit in accordance with input operation of the input operation unit, wherein the rotational operation means can move in parallel, and the control means selects recording media having recorded therein the plural pieces of edit material information corresponding to the parallel motion of the rotational operation means so as to make the edit processing unit edit the edit material information. Thus, a portable type small-sized editing apparatus whose operationality is improved can be provided.

Furthermore, since the present invention provides an image display apparatus including a main body, a cover that has its one surface facing the main body made to be of substantially the same shape as that of the main surface of the main body, an image display unit that is arranged on at least either of the main body or the cover, a shaft portion that is arranged on extension portions extending from respective corresponding one sides of the main body and the cover, and pivotably couples the main body and the cover around a axis parallel with the respective one sides, and shaft-end operation portions that protrude from the shaft portion along its axis direction. Thus, a portable type small-sized editing apparatus that has operation units arranged at outside the flat surface, for example, at both ends of a shaft portion can be provided, increasing the number of operation units and improving operationality.

## Claims

1. An editing apparatus that edits edit material information to generate resultant edited information, comprising:
a plurality of semiconductor memory insertion units into which a plurality of semiconductor memories, which have recorded therein the edit material information and/or the resultant edited information, are removably inserted respectively;
a display unit for concurrently displaying a plurality of images;
a control unit for controlling the processing of writing/reading information to/from the semiconductor memories inserted into the plural semiconductor memory insertion units, and for controlling the processing of editing the edit material information, and for controlling the processing of displaying a plurality of images on the display unit; and
an edit processing unit that is controlled by the control unit to edit the edit material information to output resultant edited information.

2. The editing apparatus as set forth in Claim 1, which has a main body of portable dimensions, and a cover that is so supported as to open and close freely in relation to the main body, and has its one surface facing the main body made to be of substantially the same shape as that of the main surface of the main body,
wherein the display unit is arranged on the surface of the cover facing the main body.

3. The editing apparatus as set forth in Claim 1, wherein
at least some of the semiconductor memories inserted into the plural semiconductor memory insertion units have stored therein the edit material information, and
the control unit reads out the edit material information from at least some of the semiconductor memories to make the edit processing unit edit the edit material information, and controls the processing of writing resultant edited information to at least one of the semiconductor memories inserted into the plural semiconductor memory insertion units.

4. The editing apparatus as set forth in Claim 1, wherein
the main body has provided thereon an operation unit which can move in parallel with a direction along which a plurality of images are displayed on the display unit when the cover is opened, and
a semiconductor memory having written therein edit material information, which is to be edited by the edit processing unit, is selected when the operation unit moves in parallel.

5. The editing apparatus as set forth in Claim 4, wherein the operation unit has a ring-shaped portion that is rotated to be operated, and a direction indicating unit that is arranged inside the ring-shaped portion and indicates linear directions.

6. The editing apparatus as set forth in Claim 1, wherein a shaft portion whose axis is parallel with respective one sides of the main body and the cover is arranged on extension portions extending from the respective corresponding one sides of the main body and the cover, and the main body and the cover are pivotably coupled by the shaft portion.

7. The editing apparatus as set forth in Claim 5, wherein the shaft portion has shaft-end operation portions that protrude from the shaft portion along its axis direction.

8. An editing apparatus that edits a plurality of pieces of edit material information recorded in a plurality of recording media to generate resultant edited information, comprising:
an edit processing unit that is controlled by a control unit to edit the plural pieces of edit material information to output resultant edited information;
an input operation unit having a rotational operation means that is rotated to be operated; and
control means for controlling the edit processing in the edit processing unit in accordance with input operation of the input operation unit;
wherein the rotational operation means can move in parallel, and the control means selects recording media having recorded therein the plural pieces of edit material information corresponding to the parallel motion of the rotational operation means so as to make the edit processing unit edit the edit material information.

9. The editing apparatus as set forth in Claim 8, wherein the rotational operation means is configured in the form of a ring, and has jog/shuttle function to control the processing of reproducing the edit material information.

10. The editing apparatus as set forth in Claim 8, wherein the rotational operation means has a ring-shaped portion that is rotated to be operated, and a direction indicating unit that is arranged inside the ring-shaped portion and indicates linear directions.

11. An image display apparatus, comprising:
a main body;
a cover that has its one surface facing the main body made to be of substantially the same shape as that of the main surface of the main body;
an image display unit that is arranged on at least either of the main body or the cover;
a shaft portion that is arranged on extension portions extending from respective corresponding one sides of the main body and the cover, and pivotably couples the main body and the cover around a axis parallel with the respective one sides; and
shaft-end operation portions that protrude from the shaft portion along its axis direction.

12. The image display apparatus as set forth in Claim 11, wherein the shaft-end operation portions can pivot around their axes.

13. The image display apparatus as set forth in Claim 11, wherein the shaft-end operation portions has a first operation portion and a second operation portion that protrude from both ends of the shaft portion.
